# EUROPEAN PATENT APPLICATION

(11) **EP 4 628 470 A1**
(43) Date of publication of application: **08.10.2025**
(21) Application number: 23897760.7
(22) Date of filing: 28.11.2023
(51) Int. Cl.: C04B 35/587, C04B 35/111, C04B 35/569, F16C 33/32

(54) **MATERIAL FOR CERAMIC BALL, METHOD FOR PRODUCING CERAMIC BALL USING SAME, AND CERAMIC BALL**

(30) Priority: 28.11.2022 JP 2022189024
(71) Applicant: Kabushiki Kaisha Toshiba, Tokyo 105-0023 (JP); Toshiba Materials Co., Ltd., Isogo-Ku Yokohama-Shi Kanagawa 235-0032 (JP)
(72) Inventor: SANO, Shoya, Yokohama-shi, Kanagawa 235-0032 (JP); FUNAKI, Kai, Yokohama-shi, Kanagawa 235-0032 (JP); SATO, Hideki, Yokohama-shi, Kanagawa 235-0032 (JP)
(74) Representative: Hoffmann Eitle
(86) International application number: PCT/JP2023/042487
(87) International publication number: WO 2024/117112

(57) **Abstract**

A ceramic ball material according to an embodiment includes a spherical portion; and a band-shaped portion formed over a circumference of a surface of the spherical portion. The ceramic ball material has a ratio R1/R2 of 0.3 or more and less than 1.0, where R1 denotes a surface roughness of an end portion of the band-shaped portion; and R2 denotes a surface roughness of a center portion of the band-shaped portion.

## Description

### TECHNICAL FIELD

Embodiments described later relate to a ceramic ball material, a method for manufacturing a ceramic ball using same, and a ceramic ball.

### BACKGROUND ART

Various ceramic materials have properties such as high hardness, insulation, and wear resistance. In particular, fine ceramics with enhanced purity and uniform particle size exhibits properties applicable in various fields of, for example, capacitors, actuator materials, and refractories. Among them, there are those for ball application as products that take advantage of wear resistance and insulation. Products for ball application include bearings, jigs, tools, gauges, solenoid valves, check valves, and other valves. Of these, materials such as aluminum oxide, silicon nitride, and zirconium oxide are used for bearing application. For example, Japanese Patent Laid-Open No. 6-48813 (Patent Document 1) and Japanese Patent No. 2764589 (Patent Document 2) each disclose a bearing ball made of silicon nitride material, while Japanese Patent Laid-Open No. 60-18620 (Patent Document 3) discloses a bearing ball made of zirconium oxide material.

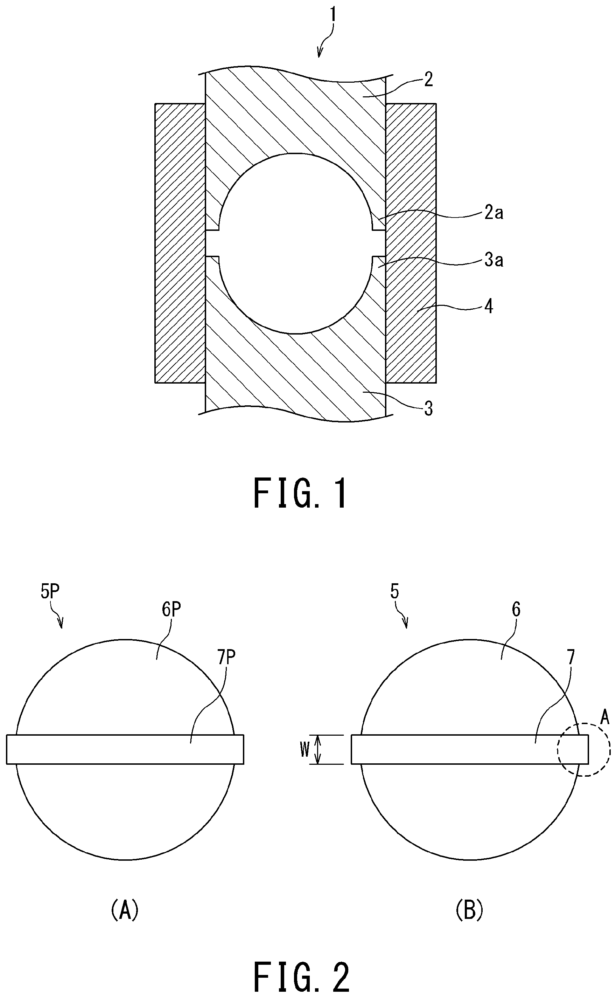

In the process of manufacturing these bearing ball materials, a method of sintering a green compact is employed. A molding method is press molding using a mold. Generally, the press molding is a method of inserting powder into a cavity between an upper punch 2 and a lower punch 3 and then applying pressure thereto as illustrated in FIG. 1. During the press molding, the press molding is performed providing a gap between a tip 2a of the upper punch and a tip 3a of the lower punch to protect the molds. As a result, a spherical portion and a band-shaped portion are formed in the green compact. For example, Japanese Patent No. 4761613 (Patent Document 4) discloses a bearing ball material including a spherical portion and a band-shaped portion. FIG. 2(A) illustrates a conventional ceramic ball material. Reference character 5P denotes the ceramic ball material, reference character 6P denotes the spherical portion, and reference character 7P denotes the band-shaped portion.

### PRIOR ART DOCUMENTS

### PATENT DOCUMENT

Patent Document 1: Japanese Patent Laid-Open No. 6-48813
Patent Document 2: Japanese Patent No. 2764589
Patent Document 3: Japanese Patent Laid-Open No. 60-18620
Patent Document 4: Japanese Patent No. 4761613

### SUMMARY OF THE INVENTION

### PROBLEMS TO BE SOLVED BY THE INVENTION

A ceramic ball material 5P with a spherical portion 6P and a band-shaped portion 7P as illustrated in FIG. 2(A) is polished to form a ceramic ball. The ceramic ball material 5P with the spherical portion 6P and the band-shaped portion 7P is sometimes referred to as a preprocessed ball. For example, the ceramic ball material 5P is mirror finished with an arithmetic surface average roughness Ra of 0.1 µm or less. The mirror finishing involves machining using surface plate.

In general, ceramic materials have excellent wear resistance but are prone to chipping when strong impacts are applied thereto because the materials are brittle. Furthermore, although curved surfaces easily release impact, corners are prone to chipping due to impact. Therefore, when the ceramic ball material 5P with the band-shaped portion 7P is machined using surface plate, the machining time is prolonged because the machining is performed in a restrained manner to reduce the possibility that both shoulders, which are the corners of the band-shaped portion 7P, selectively contact a surface plate, causing chipping.

The present invention solves such problems and provides a ceramic ball material that can shorten the processing time while suppressing chipping of ceramic materials during machining using surface plate.

### MEANS FOR SOLVING THE PROBLEMS

A ceramic ball material according to an embodiment includes a spherical portion; and a band-shaped portion formed over a circumference of a surface of the spherical portion. The ceramic ball material has a ratio R1/R2 of 0.3 or more and less than 1.0, where R1 denotes a surface roughness of an end portion of the band-shaped portion; and R2 denotes a surface roughness of a center portion of the band-shaped portion.

### BRIEF DESCRIPTION OF THE DRAWINGS

FIG. 1 is a cross-sectional view illustrating an example of a general mold press molding apparatus.
FIG. 2(A) is an external view illustrating an example of a ceramic ball material according to a conventional example (Comparative Example).
FIG. 2(B) is an external view illustrating an example of a ceramic ball material according to an embodiment.
FIG. 3 is an enlarged view of a band-shaped portion of the ceramic ball material according to the embodiment illustrated in FIG. 2(B).
FIG. 4 is an external view illustrating an example of isostatic pressing rubber molding according to an embodiment.
FIG. 5 is a cross-sectional view illustrating an example of a hole and a molded body laid in an isostatic pressing rubber molding according to an embodiment.

### DESCRIPTION OF EMBODIMENTS

Hereinafter, embodiments of a ceramic ball material, a method for manufacturing a ceramic ball using the same, and a ceramic ball are described in detail with reference to the drawings.

The ceramic ball material according to an embodiment includes a spherical portion and a band-shaped portion formed over the circumference of the surface of the spherical portion and has a ratio R1/R2 of 0.3 or more and less than 1.0, where R1 denotes a surface roughness of an end portion of the band-shaped portion; and R2 denotes a surface roughness of a center portion of the band-shaped portion.

FIG. 2(B) is a schematic view of a ceramic ball material according to an embodiment. In FIG. 2(B), reference numeral 5 denotes the ceramic ball material according to the embodiment, reference numeral 6 denotes the spherical portion, and reference numeral 7 denotes the band-shaped portion. The ceramic ball material 5 with the spherical portion 6 and the band-shaped portion 7 is sometimes referred to as a preprocessed ball. Reference character W denotes the width of the band-shaped portion 7. The width W of the band-shaped portion 7 is sometimes simply referred to as "width W". In FIG. 2(B), the seizes of the height and width of the band-shaped portion 7 with respect to the spherical portion 6 are illustrated for the purpose of description.

The ceramic ball material 5 includes the spherical portion 6 and the band-shaped portion 7. The band-shaped portion 7 is formed over the circumference of the surface of the spherical portion 6. The circumference of the surface of the spherical portion 6 may be any one of multiple circumferences of the surface of the spherical portion 6. The surface of the spherical portion 6 being a quadric surface is sufficient. Therefore, the spherical portion 6 may be a true sphere, an ellipsoid or the like. The width W of the band-shaped portion 7 is, for example, the largest width of the band-shaped portion 7 but may be the average of widths at multiple positions.

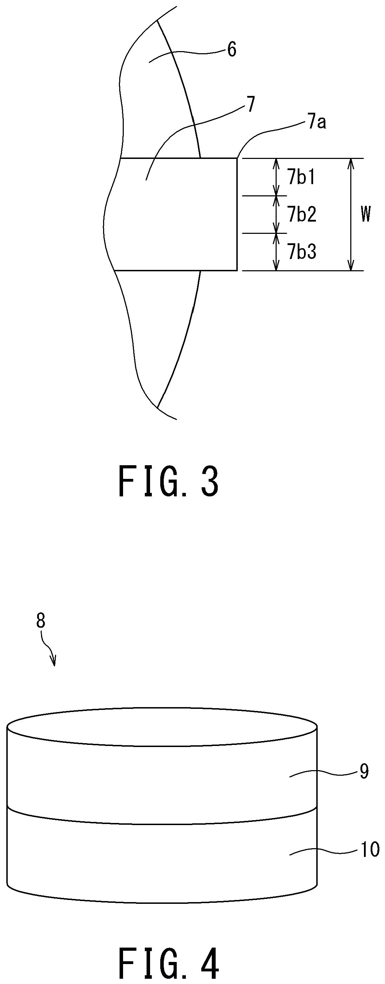

FIG. 3 illustrates an enlarged view of the portion A in the vicinity of the band-shaped portion 7 in FIG. 2(B). Reference character 7a denotes the corner of the band-shaped portion 7. The band-shaped portion 7 is divided in three in the direction of the width W to split the band-shaped portion 7 into an upper punch-side end portion (referred to as "band-shaped portion end portion") 7b1, a center portion (referred to as "band-shaped portion center portion") 7b2, and a lower punch-side end portion (referred to as "band-shaped portion end portion") 7b3. Since the shapes of the upper punch 2 and the lower punch 3 are often the same, the band-shaped portion end portion 7b1 on the upper punch side and the band-shaped portion end portion 7b3 on the lower punch side can be regarded as the same without distinction between the upper and lower sides. Therefore, the "band-shaped portion end portion 7b1" in the present specification may include not only the band-shaped portion end portion 7b1 on the upper punch side but also the band-shaped portion end portion 7b3 on the lower punch side.

The band-shaped portion of the green compact corresponding to the band-shaped portion 7 of the ceramic ball material 5 is formed to facilitate press molding. Although the ceramic ball material 5 is machined into a perfect spherical shape, the band-shaped portion 7 is formed protruding from the spherical portion 6, which hinders the processing. Therefore, it is desirable that the band-shaped portion 7 does not have high strength so as to be easily processed. On the other hand, the band-shaped portion 7 formed protruding from the spherical portion 6 is prone to chipping due to collision between products or other members during transportation or processing. To prevent this chipping, the band-shaped portion 7 needs a certain strength.

Thus, the ceramic ball material 5 according to an embodiment is adjusted such that the surface roughness of the band-shaped portion center portion 7b2 is larger than that of the band-shaped portion end portion 7b1. Since the band-shaped portion end portion 7b1 is press-molded more densely than the band-shaped portion center portion 7b2, the band-shaped portion end portion 7b1 and the band-shaped portion corner 7a have increased strength, thereby preventing chipping in the process after press molding and before polishing. On the other hand, since the band-shaped portion center portion 7b2 is not molded as densely as the corner, making the sintered body less dense, polishing becomes easier, thereby reducing the load of the process.

The surface roughness of the band-shaped end portion 7b1 and the band-shaped portion center portion 7b2 of the ceramic ball material 5 before polishing is based on JIS B 0601 (2013) "Geometrical Product Specifications (GPS) - Surface texture: Profile method - Terms, definitions and surface texture parameters". The surface roughness can be compared in terms of arithmetic average roughness (Ra), maximum height roughness (Rz), and ten point average roughness (Rzjis), which are often used to measure the surface roughness of ceramic sintered bodies. Other surface roughness indices to be used for comparison include maximum peak height (Rp) of roughness profile, maximum valley depth (Rv) of the roughness profile, average height (Rc) of roughness profile elements, maximum cross-sectional height (Rt) of the roughness profile, and other measurable surface roughness indices listed in JIS B 0601 (2013).

The ratio R1/R2 is within a range of less than 1.0, where R1 denotes the surface roughness of the band-shaped portion end portion 7b1; and R2 denotes the surface roughness of the band-shaped portion center portion 7b2. Granulated powder described below is used for press molding, but if the granulated powder is present in a state that makes it less likely to be crushed during press molding, the density of the green compact becomes less dense and has rough surface. Therefore, when R1/R2 is within this range, the band-shaped portion center portion 7b2 preferentially comes into contact with an abrasive material as the surface is rough, and thus processing proceeds. Since the density of the entire band-shaped portion 7 is smaller as compared with the case where the surface roughness of the band-shaped portion end portion 7b1 is equal to that of the band-shaped portion center portion 7b2, polishing of the band-shaped portion 7 becomes easier, thereby shortening the polishing time. Therefore, R1/R2 is preferably less than 0.9, and more preferably less than 0.8.

In addition, R1/R2 is preferably within a range of 0.3 or more. When R1/R2 is less than 0.3, the surface roughness R2 of the band-shaped portion center portion 7b2 becomes large even if the surface roughness R1 of band-shaped portion end portion 7b1 can be controlled, and the density of the green compact in and in the vicinity of the band-shaped portion center portion 7b2 becomes too small. Accordingly, a chipping defect occurs due to a decrease in the strength of the green compact of the entire band-shaped portion 7. Therefore, R1/R2 is preferably 0.4 or more, and more preferably 0.5 or more.

When R1/R2 is 1.0 or more, the density of the band-shaped portion center portion 7b2 is equal to or larger than that of the band-shaped portion end portion 7b1. If the density of the band-shaped portion center portion 7b2 is increased over that of the band-shaped portion end portion 7b1, the entire band-shaped portion 7 is less easily machined, resulting in a longer polishing time. If the density of band-shaped portion end portion 7b1 is smaller than that of the band-shaped portion center portion 7b2, the band-shaped portion end portion 7b1 is prone to chipping due to collision between elements or other members during processing or transportation.

Here, a method of measuring the surface roughness R1 of the band-shaped portion end portion 7b1 and the surface roughness R2 of the band-shaped portion center portion 7b2 in the ceramic ball material 5 are described. The method of measuring the surface roughness is in accordance with JIS B 0601 (2013) "Geometrical Product Specifications (GPS) - Surface texture: Profile method - Terms, definitions and surface texture parameters".

The surface roughness R1 and the surface roughness R2 are each measured using a surface roughness measuring machine. The surface roughness measuring machine to be used is SURFCOM2000 manufactured by TOKYO SEIMITSU CO., LTD., and the measurement is carried out using the evaluation and analysis software of the same machine. The measuring apparatus may have an equivalent function.

The measurement distance (evaluation length) of the surface roughness R1 and the surface roughness R2 is 1 to 10% of the length of the outer periphery of the band-shaped portion 7 of the ceramic ball material, and measurement distance of the band-shaped portion end portion 7b1 is the same as that of the band-shaped portion center portion 7b2. The measurement conditions are as follows: a measurement cutoff wavelength of 0.08 mm, a Gaussian cutoff type, a least-squares linear correction for slope correction, and a λs cutoff ratio of 300. The number of measurements is three, and the measured value is the average of three measurements.

The measurement area of the surface roughness R1 of the band-shaped portion end portion 7b1 is an area of the band-shaped portion end portion 7b1 that extends in the outer peripheral direction of the band-shaped portion end portion 7b1 along substantially the center in the direction of the width W. The area along this outer peripheral direction is measured. Similarly, the measurement area of the surface roughness R2 of the band-shaped portion center portion 7b2 is an area of the band-shaped portion center portion 7b2 that extends in the outer peripheral direction of the band-shaped portion end portion 7b1 along substantially the center in the direction of the width W. The area along this outer peripheral direction is measured. When there is a partial defect, such as chipping in the measurement of the surface roughness R1 and R2, the defective portion is avoided, and the measurement is made at the same place or a place in the vicinity of the band-shaped portion 7.

When the band-shaped portion 7 cannot be measured along the outer peripheral direction, the measurement may be made along the direction of the width W of the band-shaped portion 7. In this case, the measurement area of the band-shaped portion end portion 7b1 and the measurement area of the band-shaped portion center portion 7b2 may be made continuous to calculate the surface roughness R1 and R2 from these continuous measurement areas, or the measurement area of the band-shaped portion end portion 7b1 and the measurement area of the band-shaped portion center portion 7b2 may not be made continuous, and the surface roughness R1 and R2 may be separately measured from the non-continuous measurement areas. Similarly, when there is a partial defect, such as chipping in the measurement of the surface roughness R1 and R2, the measurement is made while avoiding the defective portion.

The spherical portion 6 of the ceramic ball material 5 preferably has a line segment passing through the center and having both endpoints on the outer peripheral surface, for example, a diameter of 0.5 mm or more. When the spherical portion 6 has a line segment passing through the center and having both endpoints on the outer peripheral surface, for example, a diameter of less than 0.5 mm, it becomes difficult to control a powder press mold for forming the band-shaped portion 7. Thus, the spherical portion 6 preferably has a line segment passing through the center and having both endpoints on the outer peripheral surface, for example, a diameter of 1 mm or more. The diameter is more preferably 2 mm or more.

The ceramic ball material 5 preferably contains any one or more of aluminum oxide (Al₂O₃), silicon nitride (Si₃N₄), silicon carbide (SiC), boron nitride (BN), and zirconium oxide (ZrO₂) in an amount of 85% by mass or more. The ceramic ball material 5 is made of a ceramic sintered body. The content in the ceramic sintered body is 85% by mass or more of any one or more of aluminum oxide, silicon nitride, silicon carbide, boron nitride, and zirconium oxide. In other words, the ceramic sintered body may contain 15% by mass or less of substances other than those mentioned above. The ceramic ball material 5 preferably contains 85% by mass or more of silicon nitride.

For instance, aluminum oxide, zirconium oxide, and Alusil have a Vickers hardness of about 1,200 to 1,700 but a low fracture toughness value of about 3 to 6 MPa·m^{1/2}. On the other hand, the silicon nitride sintered body has a Vickers hardness of about 1,400 to 1,800 and a high fracture toughness value of about 5 to 10 MPa·m^{1/2}. The silicon nitride sintered body has both high toughness and Vickers hardness, and is therefore excellent in wear resistance. The silicon nitride sintered body has a structure mainly composed of β-type silicon nitride crystal particles. The β-type silicon nitride crystal particles have long and narrow shapes, in which a high toughness value is achieved by complex-intertwining of long and narrow crystal particles. Although the silicon nitride sintered body has an aspect that the polishing efficiency is poor due to its high mechanical strength, the polishing efficiency can be improved even in the ceramic ball material 5 made of a ceramic sintered body with high strength, such as silicon nitride sintered body, by increasing the surface roughness of the band-shaped portion center portion 7b2, as mentioned above.

Next, a method for manufacturing the ceramic ball material 5 is described. The manufacturing method is not particularly limited as long as the ceramic ball material 5 according to the embodiment satisfies the above configuration, but the following manufacturing method is a method for efficiently manufacturing the ceramic ball material 5. The method for manufacturing the ceramic ball material 5 is described with a silicon nitride sintered body as an example.

First, a sintering aid, additive, solvent, binder, and the like are added in appropriate quantities to silicon nitride as a raw material, then mixed, crushed, and granulated with a spray dryer. Through this process, the granulated powder is prepared as the raw material powder. When the total of the silicon nitride powder and the sintering aid powder is 100% by mass, the silicon nitride powder is preferably 85% by mass or more. The additive is a plasticizer. The solvent is water or an organic solvent. Examples of the organic solvent include alcohol, ketone, and benzene. The binder is an organic substance. The amount of the binder added is in the range of 3 to 20% by mass when the total of the silicon nitride powder and the sintering aid powder is 100% by mass.

Next, the average particle size of the resulting granulated powder is reduced. If the average particle size of the granulated powder is large, the granulated powder is likely to be crushed when the press mold is filled with the granulated powder, since a space is created between granulated powders. On the contrary, a smaller average particle size results in less space between granulated powders, making them less likely to be crushed. Therefore, reduction in the average particle size of the granulated powder makes it less likely to be crushed in the center of the press, where the pressure from the punch is smaller. However, if the average particle size of the granulated powder is simply reduced, the flowability of the granulated powder into the press mold decreases, which might affect the productivity. Therefore, it is necessary to reduce the average particle size without impairing the flowability of the granulated powder.

The granulated powder usually obtained with a spray dryer generally has a normal distributed, with the distribution concentrated around the average. By mixing two types of granulated powders having different particle sizes obtained by classification, therefore, it is possible to obtain a granulated powder having a smaller average particle size without significantly impairing the flowability. The average particle size of the granulated powder used in mold press molding is 50 to 150 µm, but it is possible to reduce the average particle size by classifying. In the case where the granulated powder has an average particle size of 120 µm, for example, the granulated powder is divided in two, and one of the divided granulated powder is classified using a 70-mesh sieve (aperture: approximately 240 µm) to obtain granulated powder smaller than 70 mesh. The rest of the two-divided granulated powder is classified with a 120-mesh sieve (aperture: approximately 130 µm) to obtain granulated powder smaller than 120 mesh. By mixing the granulated powder smaller than 70 mesh with the classified granulated powder smaller than 120 mesh at a certain ratio, it is possible to reduce the average particle size of the granulated powder from 120 µm to 80 µm, thereby making it easier to increase the surface roughness R2 of the band-shaped portion center portion 7b2 of the ceramic ball material 5 through multiple processes described below.

Next, press molding is performed using the granulated powder having the average particle size adjusted, examples of which include a molding method using the upper punch 2, the lower punch 3, and the die 4 of the mold press molding apparatus as illustrated in FIG. 1. The spherical shape inside the punches becomes the spherical portion 6 of the ceramic ball material 5 through multiple processes described below by filling the granulated powder and applying pressure in the vertical direction to the upper punch 2 and the lower punch 3. The cylindrical shape inside the tip 2a of the upper punch, the tip 3a of the lower punch, and the die 4 becomes the band-shaped portion 7 of the ceramic ball material 5 through multiple processes described below. By adjusting the shape of the tip 2a of the upper punch 2 and the tip 3a of the lower punch 3 at the time of press molding and the amount of powder filled, it is possible to adjust the width W and height of the band-shaped portion 7 of the ceramic ball material 5. Similarly, the diameter in the direction of a spherical portion and the diameter in the direction of a band-shaped portion can be adjusted. The green compact obtained by press molding becomes a green compact having the spherical portion and the band-shaped portion. The spherical portion and band-shaped portion of the green compact correspond to the spherical portion 6 and band-shaped portion 7 of the ceramic ball material 5 described above, respectively.

Subsequently, the green compact is subjected to isostatic pressing. Through isostatic pressing, it is possible to uniformly apply compression to the granulated powder in the green compact, thereby reducing the remaining crushed granulated powder in the green compact. By reducing the remaining crushed granulated powder, it is possible to control the shrinkage rate in the sintering process.

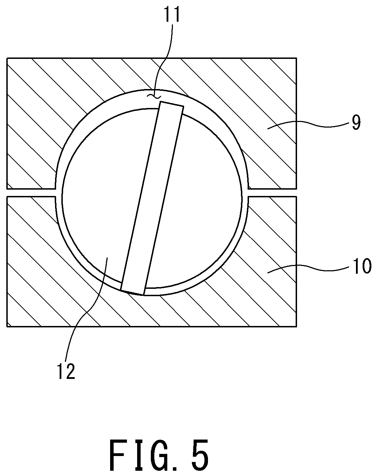

An isostatic pressing method using rubber dies is described as an example of isostatic pressing. FIG. 4 illustrates an example of a disk-shaped rubber die 8. Reference numeral 9 denotes an upper rubber die, reference numeral 10 denotes a lower rubber die. FIG. 5 is a cross-sectional view illustrating an example in which the green compact 12 is placed in the spherical portion space 11 within the upper rubber die 9 and the lower rubber die 10.

The upper rubber die 9 and the lower rubber die 10 have hemispherical holes on both surfaces that are larger than the maximum diameter of the green compact by about 1% or more and 35% or less. By placing the green compact in the holes and overlapping the rubber dies, the green compact is sealed in the spherical portion space 11 surrounded by the rubber dies. An isostatic pressure higher than the pressure at the time of molding is applied to the rubber dies. The rubber dies to be used preferably have a Shore hardness Hs of 30 or more and 50 or less. With the hardness of the rubber dies in this range, the rubber dies can have a deformability that allows uniform contact between the surface of the green compact and the rubber dies. Accordingly, it is possible to uniformly apply compression to the green compact. This process can reduce the remaining crushed granulated powder.

In addition, the pressure increasing rate at which the isostatic pressure is applied to the rubber die is preferably slow because the density of the corner of the press compact tends to increase as the pressure is first applied to the band-shaped portion corner at a slow pressure increasing rate. It is not necessary to slow the pressure increasing rate as a whole at the time of increasing pressure, but it is sufficient to slow the pressure increasing rate until the timing at which the pressure is applied to the corner. Assuming that the pressure rise at 20% or less of the maximum pressure applied to the whole is the primary pressure rise and the pressure from the primary pressure rise to the maximum pressure rise is the secondary pressure rise, it is desirable that the rate of the primary pressure rise is less than 50% of the secondary pressure rise. By slowing the rate of the primary pressure rise, in the band-shaped portion of the green compact, the pressure is applied to the corner first and the center portion last.

Subsequently, a degreasing process is performed to degrease the green compact, in which the green compact is heated at a temperature equal to or higher than the decomposition temperature of organic components such as binder to remove the organic components. The degreasing process may be performed in a nitrogen atmosphere or an air atmosphere. Through the degreasing process, a degreased compact can be obtained.

Next, a sintering process is performed to sinter the degreased compact. The sintering process is preferably performed at a temperature of 1600 degrees Celsius or more and 2000 degrees Celsius or less. The sintering process is preferably performed in a nitrogen atmosphere. The pressure during sintering is preferably in the range of atmospheric pressure or more and 1 MPa or less. Note that the atmospheric pressure is 0.10133 MPa (= 1 atm). The sintered body obtained by the sintering process may be subjected to a hot isostatic pressing (HIP) treatment. Through the sintering process (or HIP treatment process), the ceramic ball material 5 can be obtained. The ceramic ball material 5 is a ceramic sintered body having a theoretical density of 98% or more.

A ceramic ball can be manufactured by polishing the ceramic ball material 5. A typical polishing process for balls is machining using surface plate. For example, the ceramic ball material 5 is inserted into a cavity between parallel upper and lower surface plates. By the movement of the polishing surface plates, the ceramic ball material 5 is machined into a perfect spherical shape. The surface roughness of bearing balls is specified in ASTM F2094. Depending on the application, bearing balls are graded according to ASTM F2094 and polished to an arithmetic average roughness Ra according to that grade. As the grade increases, some bearing balls are polished to a mirror finish with an arithmetic surface roughness Ra of 0.01 µm or less. Note that ASTM refers to standards published by ASTM International, formerly known as American Society for Testing and Materials (ASTM) .

Although the band-shaped portion 7 of the ceramic ball material 5 according to the embodiment starts from the corner, the sintering density of the band-shaped portion center portion 7b2 is smaller than that of the band-shaped portion corner, and thus processing becomes easier towards the band-shaped portion center portion 7b2. Therefore, the machining can be performed without paying attention to the contact of the entire band-shaped portion 7 with a grinding stone of, for example, a polishing surface plate. Accordingly, it is possible to prevent the ceramic ball material 5 from being damaged in the polishing process. In addition, the durability of the polishing surface plate can be improved. By having shortened the polishing time, processability can be improved.

### (Examples 1 to 8 and Comparative Examples 1 to 6)

Sintering aids, additives, solvents, binders, and the like were added to the raw ceramic powder, then mixed, crushed, and granulated with a spray dryer. Examples 1 to 6 and Comparative Examples 1 to 4 were silicon nitride sintered bodies, Example 7 and Comparative Example 5 were aluminum oxide sintered bodies, Example 8 and Comparative Example 6 were silicon carbide sintered bodies. The silicon nitride sintered bodies contained silicon nitride in an amount of 85% by mass or more. The aluminum oxide sintered bodies contained aluminum oxide in an amount of 85% by mass or more. The silicon carbide sintered bodies contained silicon carbide in an amount of 85% by mass or more. When the main component and a sintering aid were each 100 parts by mass, the amount of binder added was in the range of 3 to 20 parts by mass.

The granulated powder was then divided in two and classified with a 70-mesh sieve. The rest of the divided granulated powder was classified with a 120-mesh sieve. The granulated powder classified by 70 mesh was mixed with the granulated powder classified by 120 mesh to obtain a granulated powder. The granulated powder was not divided in two but classified by 70 mesh to obtain a granulated powder.

Next, press molding was performed using the resulting granulated powder, which was die forming using the upper and lower dies of a mold press molding apparatus as illustrated in FIG. 1.

The die forming was followed by isostatic pressing, which involved using a disk-shaped rubber die having a Shore hardness Hs of 30 or more and 50 or less, in which a press molding body is placed in the rubber die, to apply hydrostatic pressure. In the process of isostatic pressing, a hydrostatic pressure higher than the pressure at the time of forming was applied, and a pressure up to less than half of the final hydrostatic pressure was applied as the primary pressure rise while a pressure from the primary pressure rise to the final hydrostatic pressure was applied as the secondary pressure rise. The process of isostatic pressure involved applying the pressure at the same primary and secondary pressure increasing rates, as well as the primary pressure increasing rate slower than the secondary pressure increasing rate.

Next, a sintering process was performed. The silicon nitride was subjected to heat treatment at 1700 degrees Celsius to 1900 degrees Celsius at atmospheric pressure in a nitrogen atmosphere, followed by HIP treatment at 1700 degrees Celsius to 1900 degrees Celsius at a pressure of 200 MPa in an inert gas. The aluminum oxide was subjected to heat treatment at 1500 degrees Celsius to 1700 degrees Celsius at atmospheric pressure in an air atmosphere, followed by HIP treatment at 1500 degrees Celsius to 1700 degrees Celsius at a pressure of 200 MPa in an inert gas. The silicon carbide was subjected to heat treatment at 1900 degrees Celsius to 2200 degrees Celsius, followed by HIP treatment at 1900 degrees Celsius to 2200 degrees Celsius at a pressure of 200 MPa in an inert gas.

Through this process, the ceramic ball material according to the examples was produced. In Comparative Example, only the granulated powder classified by 70 mesh was used. The primary and secondary pressure increasing rates were the same in the process of isostatic pressing. Tables 1 and 2 show the manufacturing conditions for Examples and Comparative Examples.

In Tables 1 and 2, silicon nitride was expressed as Si₃N₄, aluminum oxide as Al₂O₃, and silicon carbide as SiC as the types of sintered bodies. A mixed powder of 70 mesh and 120 mesh was expressed as 70 + 120, and a granulated powder of 70 mesh was expressed as 70.

**[Table 1]**

| | Ceramic Ball Material | | | |
|---|---|---|---|---|
| | Type of Sintered Body | Diameter After Polishing Process [inch] | Diameter Before Polishing Process [mm] | Width of Band-Shaped Portion [mm] |
| Example 1 | Si₃N₄ | 3/8 | 10.5 | 1.5 |
| Example 2 | Si₃N₄ | 3/8 | 10.5 | 1.5 |
| Example 3 | Si₃N₄ | 3/8 | 10.5 | 1.5 |
| Example 4 | Si₃N₄ | 7/8 | 23.8 | 2.5 |
| Example 5 | Si₃N₄ | 1-3/16 | 34.1 | 4.6 |
| Example 6 | Si₃N₄ | 1-7/8 | 51.7 | 7.7 |
| Example 7 | Al₂O₃ | 3/8 | 10.5 | 1.5 |
| Example 8 | SiC | 3/8 | 10.5 | 1.5 |
| Comparative Example 1 | Si₃N₄ | 3/8 | 10.5 | 1.5 |
| Comparative Example 2 | Si₃N₄ | 7/8 | 23.8 | 2.5 |
| Comparative Example 3 | Si₃N₄ | 1-3/16 | 34.1 | 4.6 |
| Comparative Example 4 | Si₃N₄ | 1-7/8 | 51.7 | 7.7 |
| Comparative Example 5 | Al₂O₃ | 3/8 | 10.5 | 1.5 |
| Comparative Example 6 | SiC | 3/8 | 10.5 | 1.5 |

**[Table 2]**

| | Mesh Size | Primary Pressure Increasing Rate [MPa/s] |
|---|---|---|
| Example 1 | 70+120 | 5 |
| Example 2 | 70+120 | 15 |
| Example 3 | 70 | 5 |
| Example 4 | 70+120 | 15 |
| Example 5 | 70 | 5 |
| Example 6 | 70+120 | 5 |
| Example 7 | 70+120 | 5 |
| Example 8 | 70+120 | 5 |
| Comparative Example 1 | 70 | 15 |
| Comparative Example 2 | 70 | 15 |
| Comparative Example 3 | 70 | 15 |
| Comparative Example 4 | 70 | 15 |
| Comparative Example 5 | 70 | 15 |
| Comparative Example 6 | 70 | 15 |

As shown in Table 1, Examples 1 to 3, 7, and 8 were each a ceramic ball material 5 for ceramic balls to be formed into 3/8 inches (9.525 mm) after the polishing process. On the other hand, Comparative Examples 1, 5 and 6 were each a ceramic ball material 5P for ceramic balls to be formed into 3/8 inches (9.525 mm) after the polishing process. Example 4 was a ceramic ball material 5 for ceramic balls of 7/8 inches (22.225 mm). On the other hand, Comparative Example 2 was a ceramic ball material 5P for ceramic balls of 7/8 inches (22.225 mm). Example 5 was a ceramic ball material 5 for ceramic balls of 1 to 3/16 inches (30.165 mm). On the other hand, Comparative Example 3 was a ceramic ball material 5P for ceramic balls of 1 to 3/16 inches (30.165 mm). Example 6 was a ceramic ball material 5 for ceramic balls of 1 to 7/8 inches (47.625 mm). On the other hand, Comparative Example 4 was a ceramic ball material 5P for ceramic balls of 1 to 7/8 inches (47.625 mm). The ceramic ball materials 5 of Examples 1 to 8 and the ceramic ball materials 5P of Comparative Examples 1 to 6 could all be used as bearing balls.

The surface roughness R1 of the band-shaped portion end portion 7b1 and the surface roughness R2 of the band-shaped portion center portion 7b2 of the ceramic ball material 5 according to Example 1, and the surface roughness R1 of the band-shaped portion end portion and the surface roughness R2 of the band-shaped portion center portion of the band-shaped portion 7P of the ceramic ball material 5P according to Comparative Example 1 were each measured at the arithmetic average roughness (Ra), maximum height roughness (Rz), ten point average roughness (Rzjis), maximum peak height (Rp) of the roughness profile, and maximum valley depth (Rv) of the roughness profile. Table 3 shows the measurement results. The arithmetic average roughness R1 of the band-shaped portion end portion 7b1 and the arithmetic average roughness R2 of the band-shaped portion center portion 7b2 of the ceramic ball materials 5 according to Examples 2 to 9, and the arithmetic average roughness R1 of the band-shaped portion end portion and the arithmetic average roughness R2 of the band-shaped portion center portion of the band-shaped portion 7P of the ceramic ball materials 5P according to Comparative Examples 2 to 7 were each measured at the arithmetic average roughness (Ra). Table 4 shows the measurement results. The respective measurement methods were as described above.

As shown in Table 3, Example 1 had R1/R2 in the case where the surface roughness was the arithmetic average roughness (Ra); Example 1-2 had R1/R2 in the case where the surface roughness was the maximum height roughness (Rz); Example 1-3 had R1/R2 in the case where the surface roughness was the ten point average roughness (Rzjis); Example 1-4 had R1/R2 in the case where the surface roughness was the maximum peak height (Rp) of the roughness profile; and Example 1-5 had R1/R2 in the case where the surface roughness was the maximum valley depth (Rv) of the roughness profile. Thus, there was no significant difference in R1/R2 regardless of whether the surface roughness was the arithmetic average roughness (Ra), the maximum height roughness (Rz), the ten point average roughness (Rzjis), the maximum peak height (Rp) of the roughness profile, or the maximum valley depth (Rv) of the roughness profile, and R1/R2 was 0.3 or more and less than 1.0.

On the other hand, as shown in Table 4, Examples 1 to 8 each had a ratio R1/R2 within the range, where R1 denotes the surface roughness of the band-shaped portion end portion 7b1; and R2 denotes the surface roughness of the band-shaped portion center portion 7b2. In contrast, Comparative Examples 1 to 6 each had a ratio R1/R2 out of the range, where R1 denotes the surface roughness of the band-shaped portion end portion of the band-shaped portion 7P; and R2 denotes the surface roughness of the band-shaped portion center portion thereof.

The ceramic ball materials 5 of Examples 1 to 8 and the ceramic ball materials 5P of Comparative Examples 1 to 6 were used to evaluate the polishing efficiency. By fixing polishing conditions for polishing each of the ceramic ball materials 5 and 5P using a ball processing polishing machine, the processed state of the band-shaped portion was examined and then evaluated. The processing conditions were as follows: no pressure was applied to the upper surface plate; the lower surface plate was rotated; and an abrasive using glycerin as a lubricant was supplied to diamond, and after 60 minutes, 100 pieces were sampled at 5-minute intervals and visually inspected for the band-shaped portions 7 and 7P to indicate the time until the band-shaped portions 7 and 7P could not be observed as a processing time of the band-shaped portions 7 and 7P. The ceramic balls of the same size and the same sintered body were used under the same conditions of the gap distance from the upper surface plate, the number of the lower surface rotations, the quantity of ceramic ball materials 5 and 5P to be fed, and the amount of the abrasive to be supplied.

**[Table 3]**

| | Surface Roughness | Surface Roughness R1 of Band-Shaped Portion End Portion [µm] | Surface Roughness R2 of Band-Shaped Portion Center Portion [µm] | R1/R2 |
|---|---|---|---|---|
| Example 1 | Ra | 0.51 | 1.06 | 0.48 |
| Examples 1-2 | Rz | 2.24 | 4.64 | 0.48 |
| Examples 1-3 | Rzjis | 2.01 | 4.42 | 0.45 |
| Examples 1-4 | Rp | 0.75 | 1.73 | 0.43 |
| Examples 1-5 | Rv | 1.49 | 2.91 | 0.51 |
| Comparative Example 1 | Ra | 0.49 | 0.48 | 1.02 |
| Comparative Examples 1-2 | Rz | 2.01 | 1.99 | 1.01 |
| Comparative Examples 1-3 | Rzjis | 1.85 | 1.77 | 1.05 |
| Comparative Examples 1-4 | Rp | 0.60 | 0.60 | 1.00 |
| Comparative Examples 1-5 | Rv | 1.41 | 1.39 | 1.01 |

**[Table 4]**

| | Surface Roughness R1 of Band-Shaped Portion End Portion [µm] | Surface Roughness R2 of Band-Shaped Portion Center Portion [µm] | R1/R2 | Processing Time Band-Shaped Portion [min.] |
|---|---|---|---|---|
| Example 1 | 0.51 | 1.06 | 0.48 | 100 |
| Example 2 | 0.66 | 0.97 | 0.68 | 105 |
| Example 3 | 0.71 | 0.86 | 0.83 | 110 |
| Example 4 | 0.72 | 1.29 | 0.56 | 100 |
| Example 5 | 0.90 | 1.29 | 0.70 | 105 |
| Example 6 | 0.98 | 1.32 | 0.74 | 105 |
| Example 7 | 0.53 | 0.56 | 0.95 | 95 |
| Example 8 | 0.57 | 0.67 | 0.85 | 120 |
| Comparative Example 1 | 0.49 | 0.48 | 1.02 | 115 |
| Comparative Example 2 | 0.50 | 0.47 | 1.06 | 115 |
| Comparative Example 3 | 0.53 | 0.49 | 1.08 | 115 |
| Comparative Example 4 | 0.56 | 0.50 | 1.12 | 120 |
| Comparative Example 5 | 0.58 | 0.58 | 1.00 | 100 |
| Comparative Example 6 | 0.66 | 0.65 | 1.02 | 125 |

As can be seen from Table 4, in the ceramic ball materials 5 according to Examples 1 to 8, the processability of the band-shaped portion 7 was improved, which means that the processing time of the ceramic ball material 5 according to Examples 1 to 8 can be shortened. Although the processing conditions were the same for the ceramic ball materials 5 according to Examples 1 to 8 and the ceramic ball materials 5P according to Comparative Examples 1 to 6, both of the ceramic ball materials 5 and 5P, chipping (damage) of the corner portion of the band-shaped portion during processing did not occur.

As described above, the ceramic ball material 5 can shorten the processing time while suppressing chipping of ceramic materials during polishing.

While certain embodiments have been described, these embodiments have been presented by way of example only, and are not intended to limit the scope of the inventions. Indeed, the novel methods and systems described herein may be embodied in a variety of other forms; furthermore, various omissions, substitutions and changes in the form of the methods and systems described herein may be made without departing from the spirit of the inventions. The accompanying claims and their equivalents are intended to cover such forms or modifications as would fall within the scope and spirit of the inventions.

## Claims

1. A ceramic ball material comprising:
a spherical portion; and
a band-shaped portion formed over a circumference of a surface of the spherical portion, wherein
the ceramic ball material has a ratio R1/R2 of 0.3 or more and less than 1.0, where R1 denotes a surface roughness of an end portion of the band-shaped portion; and R2 denotes a surface roughness of a center portion of the band-shaped portion.

2. The ceramic ball material according to claim 1, wherein
a line segment passing through a center of the spherical portion and having both endpoints on an outer peripheral surface is 0.5 mm or more, and
the ceramic ball material has a ratio R1/R2 of 0.4 or more and less than 0.9, where R1 denotes a surface roughness of the end portion of the band-shaped portion; and R2 denotes a surface roughness of the center portion of the band-shaped portion.

3. The ceramic ball material according to claim 1 or 2, wherein the ceramic ball material comprises any one of an aluminum oxide sintered body, a silicon nitride sintered body, a silicon carbide sintered body, a boron nitride sintered body, and a zirconium oxide sintered body.

4. The ceramic ball material according to claim 1 or 2, wherein the ceramic ball material comprises a ceramic sintered body containing 85% by mass or more of silicon nitride.

5. A method for manufacturing a ceramic ball, comprising:
polishing the ceramic ball material according to claim 3 to manufacture a ceramic ball.

6. A ceramic ball obtained by polishing the ceramic ball material according to claim 3.

7. The ceramic ball according to claim 6, wherein the ceramic ball has an arithmetic surface roughness Ra of 0.01 µm or less.
